# EUROPÄISCHE PATENTANMELDUNG

(11) **EP 4 270 124 A1**
(43) Veröffentlichungstag der Anmeldung: **01.11.2023**
(21) Anmeldenummer: 22170033.9
(22) Anmeldetag: 26.04.2022
(51) Int. Cl.: G05B 19/408, G05B 19/418, B25J 9/16

(54) **VERFAHREN ZUM BETREIBEN EINER FERTIGUNGSANLAGE, COMPUTERPROGRAMM UND ELEKTRONISCH LESBARER DATENTRÄGER**

(71) Anmelder: Siemens Aktiengesellschaft, 80333 München (DE)
(72) Erfinder: Hauser, Tobias, 89347 Bubesheim (DE); Lutz, Benjamin Samuel, 91056 Erlangen (DE); Pantano, Matteo, 81737 München (DE); Regulin, Daniel, 81825 München (DE); Reisch, Raven Thomas, 81379 München (DE)
(74) Vertreter: Siemens Patent Attorneys

(57) **Zusammenfassung**

Die Erfindung betrifft ein Verfahren zum Betreiben einer mehrere Produktionsmaschinen umfassenden Fertigungsanlage, in welcher ein Objekt durch Produktionsschritte mittels der Produktionsmaschinen zumindest teilweise gefertigt wird. Ferner betrifft die Erfindung ein Computerprogramm und einen elektronisch lesbaren Datenträger.

## Beschreibung

Die Erfindung betrifft ein Verfahren zum Betreiben einer mehrere Produktionsmaschinen umfassenden Fertigungsanlage gemäß dem Patentanspruch 1. Ferner betrifft die Erfindung ein Computerprogramm gemäß dem Patentanspruch 9. Schließlich betrifft die Erfindung einen elektronisch lesbaren Datenträger gemäß dem Patentanspruch 10.

In der Industrie 3.0 kommt häufig A-priori-Planung für einen Fertigungsprozess zum Einsatz. Diese wird jedoch in der aufkommenden Industrie 4.0 durch sogenannte Losgröße-1-Produktion (englisch: lot-sized-one production) verdrängt, da immer häufiger eine heterogene Nachfrage nach Produktvarianten den Fertigungsprozess bestimmt. Somit ist eine fähigkeitsbasierte Entwicklung (englisch: Capability Based Engineering) für Fertigungsprozesse mehr und mehr auf dem Vormarsch.

So könnten Fabriken der Zukunft (englisch: Factories of the Future) beziehungsweise zukünftige Fertigungsanlagen dazu ausgebildet sein, ihre Produktionspläne während einer Auftragsabwicklung anzupassen. Für solch eine Umsetzung der fähigkeitsbasierten Produktion müssen Ressourcen, welche beispielsweise von Produktionsmaschinen bereitgestellt werden, im Vorfeld erfassbar sein, um eine konkrete Planung von Fertigungsprozessen zu gewährleisten.

Daher ist es Aufgabe der vorliegenden Erfindung, ein Verfahren zum Betreiben einer Fertigungsanlage, ein Computerprogramm sowie einen elektronisch lesbaren Datenträger bereitzustellen, durch welche auf besonders vorteilhafte Weise eine mehrere Produktionsmaschinen umfassende Fertigungsanlage für eine Fertigung eines Objekts betrieben werden kann.

Diese Aufgabe wird erfindungsgemäß durch die Gegenstände der unabhängigen Patentansprüche gelöst. Vorteilhafte Ausgestaltungen und Weiterbildungen der Erfindung sind in den abhängigen Patentansprüchen sowie in der Beschreibung und in der Zeichnung angegeben.

Ein erster Aspekt der Erfindung betrifft ein Verfahren zum Betreiben einer mehrere Produktionsmaschinen umfassenden Fertigungsanlage. Die Fertigungsanlage ist dazu ausgebildet, ein Objekt durch Produktionsschritte mittels der Produktionsmaschine zumindest teilweise zu fertigen. Das erfindungsgemäße Verfahren umfasst mehrere Schritte:
In einem ersten Schritt erfolgt ein Ablegen von Produktionsanweisungen, welche die Produktionsschritte zur Fertigung beziehungsweise Herstellung des Objekts charakterisieren, in einem vorgegebenen Dateiformat in einem Speicher einer elektronischen Recheneinrichtung. Die jeweilige Produktionsanweisung kann beispielsweise Produktionsparameter und/oder Objekteigenschaften und/oder Materialeigenschaften eines Ausgangsmaterials und/oder Eigenschaften der Produktionsmaschine beziehungsweise Anforderungen an die Produktionsmaschine beinhalten.

In einem zweiten Schritt erfolgt ein Zergliedern beziehungsweise Analysieren der Produktionsanweisungen und ein Ablegen der jeweiligen Produktionsanweisung in wenigstens einem Container. Das Zergliedern beziehungsweise Analysieren wird auch als Parsen bezeichnet, wobei dabei aus dem vorgegebenen Dateiformat eine Überführung beispielsweise in ein Containerformat für den Container erfolgt. Liegt dem vorgegebenen Dateiformat eine Spezifikationssprache zugrunde, kann bei dem Überführen ein Wechsel zu Auszeichnungssprache durchgeführt werden. Bei dem Container kann es sich insbesondere um eine Containerdatei, welche eine Datenstruktur aufweist, in welcher verschiedene Dateiformate zusammengeführt werden können, handeln. Insbesondere handelt es sich bei dem Container jedoch um einen Container für eine Container-Virtualisierung, bei welcher der Container quasi als eigenständiges Laufzeitmodul in der elektronischen Recheneinrichtung und/oder in einer von der elektronischen Recheneinrichtung verschiedenen Recheneinrichtung, welche beispielsweise eine Steuereinrichtung einer der Produktionsmaschinen bildet, ausgeführt werden kann.

In einem dritten Schritt erfolgt ein Durchführen eines Abgleichs der zergliederten Produktionsanweisungen mit durch die jeweilige Produktionsmaschine bereitstellbarer Ressource, welche bei einem der Produktionsschritte verwendbar ist beziehungsweise verwendet werden kann. Mit anderen Worten ermöglicht zumindest eine der Produktionsmaschinen einen Arbeitsgang zur Herstellung des Objekts oder kann gegebenenfalls entsprechend umgerüstet werden. Handelt es sich beispielsweise bei der Produktionsmaschine um eine Fräse, kann als Arbeitsgang ein Fräsen bereitgestellt werden, wobei somit als Ressource durch die Produktionsmaschine ein Fräsen zur Verfügung gestellt werden kann. Dabei kann auch die Produktionsmaschine selbst bereits die Ressource sein. Dabei ist je nach Art der Fertigung beziehungsweise Art des Objekts eine Ressource vorteilhaft, eine andere nicht, sodass beispielsweise eine Produktionsmaschine für die Fertigung des Objekts geeignet ist und eine andere der Produktionsmaschinen nicht. Bei dem Abgleich wird somit zumindest vorab ermittelt, inwieweit eine Produktionsanweisung mit einer Ressource kompatibel ist beziehungsweise ob Produktionsanweisung und Produktionsmaschine beziehungsweise Ressource miteinander korrespondieren.

Damit dies besonders vorteilhaft erfolgen kann, erfolgt in einem vierten Schritt das Ermitteln eines Abstandswerts zwischen korrespondierender Produktionsanweisung und Ressource beziehungsweise zwischen korrespondierenden Produktionsanweisungen und Ressourcen anhand des Abgleichs. Mit anderen Worten wird eine mögliche Differenz zwischen dem durch die Produktionsanweisung beschriebenen Produktionsschritt und der dafür benötigten tatsächlichen Ressource und der durch die Produktionsmaschine bereitgestellten Ressource quantifiziert.

In einem fünften Schritt erfolgt eine Auswahl wenigstens eines Containers, der wenigstens eine Produktanweisung umfasst, deren ermittelter Abstandswert kleiner als ein vorgegebener Schwellenwert von der durch die Produktionsmaschine bereitstellbaren Ressource ist.

Somit erfolgt schließlich in einem sechsten Schritt ein Bereitstellen des ausgewählten Containers an die die korrespondierende Ressource vorhaltende Produktionsmaschine zur Herstellung des Objekts. Beziehungsweise können mehrere Container bereitgestellt werden und/oder kann dies an mehrere Produktionsmaschinen erfolgen. So kann durch das Bereitstellen des Containers die Produktionsmaschine mit eben diesem Container betrieben werden, um zumindest einen Produktionsschritt für die Herstellung beziehungsweise Fertigung des Objekts durchzuführen.

Dabei liegt der Erfindung die Erkenntnis zugrunde, dass insbesondere bei einer Industrie 4.0 und somit beim fähigkeitsbasierten Engineering die benötigten Fähigkeiten häufig auf Softwarefähigkeiten der Produktionsmaschinen beruhen, da die Softwarefähigkeit mit der Ressource verbunden ist. Durch Container, insbesondere Softwarecontainer, welche in der Container-Virtualisierung verwendet werden, kann auf einfache Weise eine Ressource auf eine andere Produktionsmaschine übertragen werden, beziehungsweise kann eine Ressource von ähnlichen Produktionsmaschinen einfach benutzt werden. Durch einen Einzug in die Fertigung der Fertigungsanlage ergibt sich somit der Vorteil, die fähigkeitsbasierte Fertigung zu verbessern.

Eine Folge bei der Verwendung von Containern in Fertigungsanlagen besteht jedoch darin, eine Rückverfolgbarkeit und Verwendbarkeit von Containern während des gesamten Produktlebenszyklus des Objekts beziehungsweise der Fertigungsanlage über verschiedene Ressourcen und somit Produktionsmaschinen und/oder Produkte als Objekte zu ermöglichen. Dies wird durch das vorgestellte erfindungsgemäße Verfahren technisch ermöglicht.

Dahingegen gab es bisherige Konzepte in der Literatur, bei welchen große Probleme bei der Verwaltung von Containern zu erkennen waren. Demgegenüber ist die Verwaltung der Container im erfindungsgemäßen Verfahren besonders vorteilhaft, auch falls verschiedene Arten von Containern in der Produktion beziehungsweise Fertigung verwendet werden. So ist ein Vorteil des erfindungsgemäßen Verfahrens eine rückverfolgbare Verwaltung der Container. Somit wird durch das Verfahren eine vorteilhafte Dokumentation und Rückverfolgbarkeit sowohl für die technische Planung als auch für den Einsatz in der Fertigungsanlage ermöglicht.

Dabei liegt der Erfindung ferner die Erkenntnis zugrunde, dass bisher zumindest zwei Arten der A-priori-Modellierung bekannt sind. So machen Schönberger et al. 2018 für eine kollaborative Robotik den Vorschlag zur Verwendung der Business Process Model Notation (kurz: BPMN), welche eine grafische Spezifikationssprache für insbesondere Wissenschaft, Informatik und ein Prozessmanagement darstellt. Dadurch können Aufgaben modelliert werden, welche ein kollaborativer Roboter und ein Werker gemeinsam erledigen können. Dabei wird das BPMN zur Darstellung von Arbeitsabläufen in der Robotic Process Automation (kurz: RPA) zur Automatisierung einfacher IT-Aufgaben, zum Beispiel Datenanalyse, eingesetzt. Dies zeigt beispielsweise Enriquez et al. 2020.

Eine zweite Variante der bisher bekannten A-priori-Modellierung wurde von Schleipen et al. 2014 publiziert, wobei eine Modellierung durch Automation ML (kurz: AML) erfolgt. Bei Automation ML handelt es sich um ein neutrales Dateiformat insbesondere für die Speicherung und zum Austausch von Anlagenplanungsdaten, welcher als offener Standard zur Verfügung steht. Dadurch wird eine gewisse Interoperabilität gewährleistet. Sie wird häufig mit der OPC UA (OPC Unified

Architecture) verwendet, wie Zimmermann et al. 2019 zeigen. Durch die beiden genannten Varianten der A-priori-Modellierung kann eine gewisse Nachvollziehbarkeit erreicht werden. Jedoch tritt zumindest dann eine Lücke auf, wenn ein Bediener beziehungsweise Werker, ein kollaborativer Roboter und eine rekonfigurierbare Produktion beziehungsweise Fertigung berücksichtigt werden sollen.

Durch das erfindungsgemäße Verfahren können für zumindest einen der Produktionsschritte in der Fertigung auf vorteilhafte Weise Wissen und/oder Parameter gespeichert, gesammelt und/oder weitergegeben werden. So können ein Produktlebenszyklus-Management (englisch: Product Life Cycle Management, kurz: PLM) und somit ein strategisches Konzept zum Management und der Entwicklung der Objekte beziehungsweise von Produkten ermöglicht werden.

Des Weiteren ist ein Vorteil, dass ein einfacher Modellierungsansatz gewählt wird, welcher insbesondere durch das gewählte vorgegebene Dateiformat ermöglicht wird, welches derart ausgelegt ist, dass es sowohl von IT-Anwendern als auch von Nicht-IT-Anwendern besonders vorteilhaft genutzt werden kann. Dies kann insbesondere mit der ISA95-Norm kombiniert beziehungsweise integriert werden, welche eine Integration von Unternehmens- und Betriebsebenen vorsieht. So können das Verfahren beziehungsweise die aus dem Verfahren festgehaltenen Informationen besonders vorteilhaft verwendet werden, wodurch beispielsweise auch eine Umrüstung einer Fertigungsanlage im sogenannten Brownfield - also bei einer Eingliederung neuer Komponenten in eine bestehende Systemarchitektur der Fertigungsanlage - vorteilhaft durchgeführt werden kann.

Darüber hinaus bieten sich Möglichkeiten einer Sicherheitsprüfung, beispielsweise wenn die Produktionsmaschine als kollaborierender Roboter ausgebildet ist, sodass eine Sicherheitsbewertung erfolgen kann, wobei dies gleichzeitig für mehrere Standorte der Fertigungsanlage durchgeführt werden kann. Dadurch kann beispielsweise auf besonders vorteilhafte Weise eine dafür vorgesehene Wartezeit verkürzt werden.

In vorteilhafter Ausgestaltung der Erfindung wird ein Parametersatz aus der in dem bereitgestellten Container hinterlegten Produktionsanweisung gebildet und insbesondere ebenfalls im Container hinterlegt. Mit anderen Worten erfolgt eine Parametrierung der Produktionsanweisung, insbesondere im Hinblick auf eine Lesbarkeit der Produktionsanweisung für die Ressource beziehungsweise die Produktionsmaschine. So wird quasi ein Parametrisierungsprozess durchgeführt, bei dem beispielsweise durch die Recheneinrichtung und/oder eine Steuereinrichtung der Produktionsmaschine ein Analysieren und/oder Auswerten der in dem vorgegebenen Dateiformat hinterlegten Produktionsanweisung erfolgen kann. Dadurch ergibt sich der Vorteil, dass die Fertigungsanlage besonders vorteilhaft betrieben werden kann.

In weiterer vorteilhafter Ausgestaltung der Erfindung werden der Parametersatz und der zugehörige Container in einer Datenbank gespeichert. Darauf kann insbesondere bei einer Wiederholung des Verfahrens beispielsweise für das Ablegen in dem ersten Schritt des Verfahrens zugegriffen werden. Dabei ist die Datenbank insbesondere kein Teil des Speichers der elektronischen Recheneinrichtung, sondern beispielsweise ein Speicherbereich eines Speichers einer weiteren elektronischen Recheneinrichtung. Insbesondere wird beim Speichern in der Datenbank zusätzlich eine Indexierung über die Container durchführt. Dabei wird der jeweilige Container insbesondere als Containerabbild (englisch: Container Image) in der Datenbank hinterlegt. Mit anderen Worten werden individuelle durch das Verfahren ermittelte Produktionsanweisungen, Parametrisierungen, Abstandswerte und dergleichen hinterlegt, wohingegen Standardkomponenten des Containers beispielsweise für eine effiziente Speicherung ausgeklammert werden können. Dadurch ergibt sich der Vorteil, dass die Fertigung des Objekts besonders vorteilhaft in mehreren Fertigungsanlagen durchgeführt werden kann und somit mehrere Fertigungsanlagen insbesondere gleichzeitig und/oder parallel betrieben werden können.

In weiterer vorteilhafter Ausgestaltung der Erfindung bildet der Parametersatz bei einer Wiederholung des Verfahrens zumindest einen Teil der Produktionsanweisung, welche insbesondere im ersten Schritt abgelegt wird. Mit anderen Worten gibt es eine sogenannte Rückkopplung, bei welcher bei einer Wiederholung der Fertigung auf bereits generierte Informationen und somit erlangtes Wissen eines vorherigen durch das Verfahren durchgeführten Herstellungsprozess zurückgegriffen werden kann. Dadurch kann das Verfahren besonders vorteilhaft verwendet werden.

In weiterer vorteilhafter Ausgestaltung der Erfindung wird das vorgegebene Dateiformat im Format einer Auszeichnungssprache und/oder einer Spezifikationssprache ausgebildet. Mit anderen Worten werden Informationen betreffend die Produktionsanweisungen in dem Dateiformat durch eine Auszeichnungssprache und somit insbesondere als maschinenlesbare Sprache, wie XML (Extensible Markup Language), dargestellt, welche hierarchisch strukturierte Daten im Format einer Text-Datei ermöglicht. Zusätzlich oder alternativ erfolgt das Darstellen durch eine Spezifikationssprache, welche eine bestimmte Art der Abstraktion ermöglicht. Die Spezifikationssprache ist somit insbesondere eine sogenannte High-Level-Sprache. Durch die Spezifikationssprache kann beispielsweise für einen Werker und/oder für einen Benutzer des Verfahrens eine Produktionsanweisung bei der Planung des herzustellenden Objekts besonders einfach ausgegeben werden. Dabei wird insbesondere auf die bereits bekannte Business Process Model Notation (kurz: BPMN) zurückgegriffen, welche eine grafische Spezifikationssprache darstellt. Dadurch ergibt sich der Vorteil, dass das Verfahren eine besonders hohe Interoperabilität zwischen Fertigungsanlage und Entwicklung ermöglicht. Gleichzeitig kann durch einen Werker und/oder einen Kontrolleur besonders vorteilhaft sowohl die Planung der Fertigung als auch die Fertigung selbst überprüft werden.

In weiterer vorteilhafter Ausgestaltung der Erfindung enthält beziehungsweise umfasst der jeweilige Container zusätzlich zur Produktionsanweisung ein Laufzeitmodul und/oder ein Systemwerkzeug und/oder eine Systembibliothek, wodurch der Container dazu ausgebildet ist, die jeweilige Produktionsmaschine zu betreiben, beziehungsweise wird wodurch die Produktionsmaschine mittels des Containers betrieben. Mit anderen Worten ist der Container als Softwarecontainer ausgebildet, welcher für eine Container-Virtualisierung systembetriebsartige Komponenten mitbringt, wodurch die Produktionsmaschine betrieben werden kann. Dadurch ergibt sich der Vorteil, dass auf besonders vorteilhafte Weise der jeweilige Produktionsschritt und die dafür benötigte Ressource durch das Verfahren bereitgestellt werden kann, wodurch auf besonders vorteilhafte Weise durch das Verfahren die Produktion beziehungsweise Fertigung des Objekts durchführbar ist.

In weiterer vorteilhafter Ausgestaltung der Erfindung wird als eine der Produktionsmaschinen ein Roboter, insbesondere ein kollaborativer Roboter, verwendet. Mit anderen Worten wird zusätzlich oder alternativ zu Produktionsmaschinen, wie Fräsen, Bohrer, Säge, Schleifmaschinen und/oder Drehbank und/oder Maschinen der additiven Fertigung, wenigstens ein Roboter verwendet. Dabei kann der Roboter beispielsweise als Roboterarm ausgebildet sein und somit beispielsweise besonders flexibel eingesetzt werden, sodass er eine besondere Anzahl an Ressourcen bereitstellt und ferne mögliche Anforderungen an eine Industrie 4.0 erfüllt. Der Roboter kann insbesondere von einem Werker angelernt werden, da der Roboter beispielsweise über Sensoren verfügt, durch welche er Bewegungen des Werkers erfassen und/oder nachahmen kann. Dadurch ergibt sich der Vorteil, dass mit dem Verfahren besonders flexibel auf variierende Fertigungsanforderungen reagiert werden kann.

In weiterer vorteilhafter Ausgestaltung der Erfindung wird der Abstandswert mittels einer Levenshtein-Distanz ermittelt. Mit anderen Worten wird als der jeweilige Abstandswert eine Bestimmung der Ähnlichkeit von Zeichenketten durchgeführt, welches insbesondere eine dynamische Verwendung ermöglicht. Durch die Levenshtein-Distanz können unterschiedliche Dateitypen verglichen werden und so eine Distanzberechnung besonders vorteilhaft durchgeführt werden. Dadurch kann auf besonders vorteilhafte Weise eine Eignung einer Ressource für einen jeweiligen Produktionsschritt beziehungsweise die Produktionsanweisung ermittelt werden. So kann durch das Verfahren die Fertigungsanlage besonders effizient betrieben werden.

Ein zweiter Aspekt der Erfindung umfasst ein Computerprogramm. Das Computerprogramm kann beispielsweise in einem Speicher der elektronischen Recheneinrichtung einer Presse geladen werden und umfasst Programmmittel, um die Schritte des Verfahrens auszuführen, wenn das Computerprogramm in der elektronischen Recheneinrichtung beziehungsweise einer Steuerungseinrichtung ausgeführt wird.

Dabei sind Vorteile und vorteilhafte Ausgestaltungen des ersten Aspekts der Erfindung als Vorteile und vorteilhafte Ausgestaltungen des zweiten Aspekts der Erfindung anzusehen und umgekehrt.

Ein dritter Aspekt der Erfindung betrifft einen elektronisch lesbaren Datenträger. Der elektronisch lesbare Datenträger umfasst darauf gespeicherte elektronisch lesbare Steuerinformationen, die zumindest ein Computerprogramm wie soeben vorgestellt umfassen und derart ausgestaltet sind, dass sie bei der Verwendung des Datenträgers in einer elektronischen Recheneinrichtung ein hier vorgestelltes Verfahren gemäß dem ersten Aspekt der Erfindung ausführen können.

Dabei sind Vorteile und vorteilhafte Ausgestaltungen des dritten Aspekts der Erfindung als Vorteile und vorteilhafte Ausgestaltungen sowohl des zweiten als auch des ersten Aspekts der Erfindung anzusehen und jeweils umgekehrt.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.
- FIG 1: schematisches Ablaufdiagramm für ein Verfahren zum Betreiben einer mehrere Produktionsmaschinen umfassenden Fertigungsanlage;
- FIG 2: schematisches Diagramm für einen Produktionsschritt zur Fertigung eines Objekts mittels der Fertigungsanlage durch das Verfahren gemäß FIG 1; und
- FIG 3: schematisches Diagramm eines in dem Verfahren gemäß FIG 1 verwendeten Dateiformats.

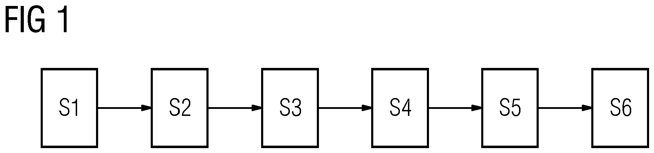

FIG 1 zeigt ein schematisches Ablaufdiagramm eines Verfahrens zum Betreiben einer mehrere Produktionsmaschinen 10 umfassenden Fertigungsanlage 12, in welcher ein Objekt durch Produktionsschritte mittels der Produktionsmaschinen 10 zumindest teilweise gefertigt wird.

Dabei umfasst das vorgestellte Verfahren mehrere Schritte:
In einem ersten Schritt S1 des Verfahrens erfolgt ein Ablegen von Produktionsanweisungen, welche Produktionsschritte zur Herstellung des Objekts charakterisieren, in einem vorgegebenen Dateiformat 14 in einem Speicher 16 einer elektronischen Recheneinrichtung 18.

In einem zweiten Schritt S2 erfolgt ein Zergliedern beziehungsweise Analysieren der Produktionsanweisung. Mit anderen Worten erfolgt ein Parsen der Produktionsanweisung. Ferner erfolgt in dem zweiten Schritt S2 ein Ablegen der jeweiligen Produktionsanweisung in einem Container.

In einem dritten Schritt S3 erfolgt das Durchführen eines Abgleichs der zergliederten Produktionsanweisung mit durch die jeweilige Produktionsmaschine 10 bereitstellbarer Ressource beziehungsweise bereitstellbaren Ressourcen, welche bei einem der Produktionsschritte verwendbar ist beziehungsweise sind.

In einem vierten Schritt S4 erfolgt ein Ermitteln eines Abstandswertes zwischen korrespondierenden Produktionsanweisungen und Ressourcen anhand des Abgleichs.

In einem fünften Schritt S5 erfolgt eine Auswahl wenigstens eines Containers der abgelegten beziehungsweise gespeicherten Container, der wenigstens eine Produktionsanweisung umfasst, deren ermittelter Abstandswert kleiner als ein vorgegebener Schwellenwert ist, sodass die durch die Produktionsanweisung angeforderte beziehungsweise benötigte Ressource durch eine der Produktionsmaschinen 10 bereitgestellt werden kann.

So erfolgt schließlich in einem sechsten Schritt S6 des Verfahrens ein Bereitstellen des ausgewählten Containers an die die korrespondierende Ressource vorhaltende Produktionsmaschine 10 zur Herstellung des Objekts.

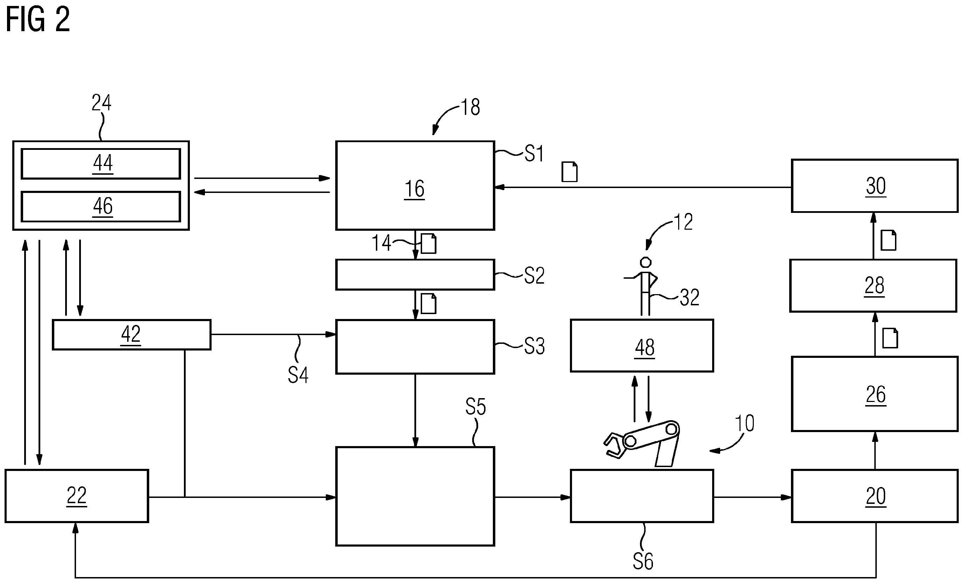

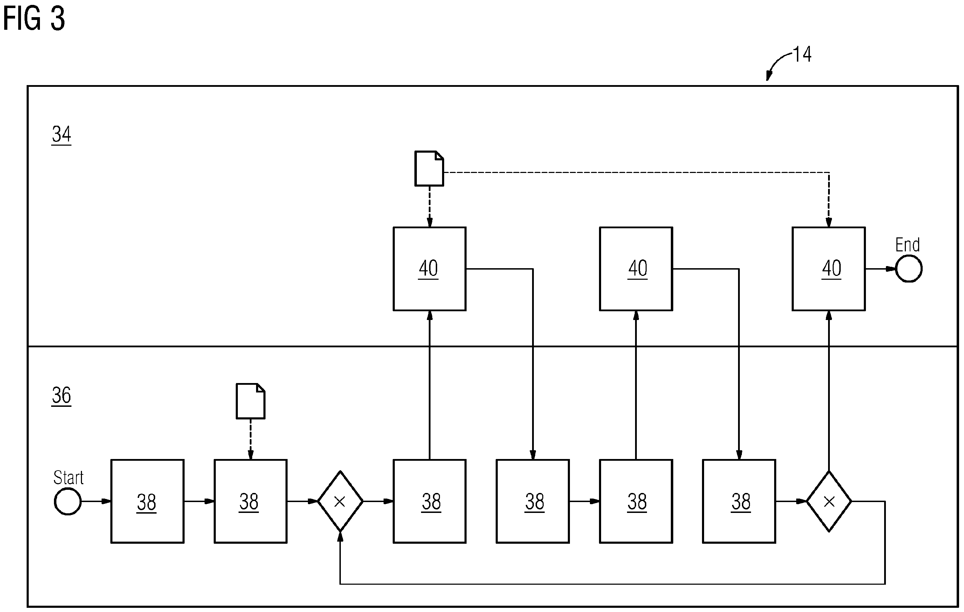

FIG 2 zeigt einen schematischen Ablauf des Verfahrens für einen der Produktionsschritt zur Fertigung des Objekts. Bei der elektronischen Recheneinrichtung 18 handelt es sich beispielsweise um die Recheneinrichtung eines die Produktion leitendenden Ingenieurs und/oder eines Sicherheitsbüro. Das vorgegebene Dateiformat 14 wird im Format einer Auszeichnungssprache und/oder einer Spezifikationssprache ausgebildet. Insbesondere wird wenigstens eine der Produktionsanweisungen in der Business Process Model Notation (kurz: BPMN) vorgehalten. Die Fig.3 zeigt einen exemplarischen Ablauf eines Prozessschrittes in der BPMN.

Beim Schritt S2 des Verfahrens kann beispielsweise eine Umwandlung von BPMN in XML-Datei erfolgen und somit ein Parsen eines Dateiformats in ein anderes. Vorteilhafterweise kann ein Parametersatz 20 aus der im bereitgestellten Container hinterlegten Produktionsanweisung gebildet werden. Der Parametersatz 20 und/oder der zugehörige Container können in einer Datenbank 22 gespeichert und abgelegt werden, wobei insbesondere bei einer Wiederholung des Verfahrens darauf zugegriffen werden kann. Dabei kann insbesondere ein globaler Index beziehungsweise Registrierung der in der Datenbank hinterlegten Container erfolgen, sodass beispielsweise ein globales Verzeichnis 44 (englisch: Registry), welches beispielsweise durch eine weitere elektronische Recheneinrichtung 24 ausgebildet oder zumindest vorgehalten wird, erzeugt und bereitgestellt wird. Dabei kann die Bereitstellung beispielsweise durch einen Rechnerverbund über ein Datennetz und somit über eine Cloud. So können Informationen jeweiligen elektronischen Recheneinrichtung 18 von unterschiedlichen Fertigungsanlagen 12 bereitstellt werden. Zusätzlich zu dem globalen Verzeichnis 44 kann eine insbesondere mit diesem verknüpfte Beschreibung 46 vorgehalten werden, welche beispielsweise im XML-Format vorgehalten wird und Eigenheiten der zugehörigen Container beziehungsweise Skills beschreibt.

So kann der Parametersatz 20 bei einer Wiederholung des Verfahrens zumindest einen Teil der Produktionsanweisungen bilden, sodass diese beispielsweise nicht neu erstellt werden müssen und die bereits in dem Speicher 16 hinterlegten Informationen ergänzen, sodass beispielsweise Erfahrungswerte eines Werkes 32 einfließen. Als Feedback kann bei dem Verfahren anhand der Parametrisierung eine verfügbare Ressource vorteilhaft ausgewählt werden, wobei dies durch einen weiteren Abgleich 26 erfolgen kann. Dazu kann eine Umwandlung 28 von Parametern und XML durchgeführt werden kann. Schließlich kann ein weiteres Parsen 30 in das vorgegebene Dateiformat 14 - insbesondere ins BPMN - erfolgen. Dem Werker 32 steht insbesondere ein Mensch-Maschine-Interface 48, beispielsweise ein AR-Brille und/oder ein Eingabegerät, wie eine Tastatur, bereit, um beispielsweise mit der Produktionsmaschine 10 zu kommunizieren.

Durch das vorgestellte Verfahren kann beispielsweise bei einer Modellierung für eine heterogene Nachfrage einer Produktionsvariante gemäß einer Industrie 4.0 ein bisher bekanntes Problem der mangelnden Nachvollziehbarkeit umgangen werden. Bei Fertigungen gemäß dem Stand der Technik ergab sich bisher bei einem Zusammenspiel eines Werkers 32 mit einer insbesondere als kollaborativer Roboter ausgebildeten Produktionsmaschine 10 und einer rekonfigurierbaren Produktion, also einer flexiblen Fertigung der Fertigungsanlage, eine Lücke. So ist ein Mangel der dort auftreten kann, dass der Werker 32 eine Reihe von Softwarecontainern aus einem Verzeichnis, welche beispielsweise einen Marktplatz für Container bereitstellt, herunterlädt und der Werker 32 entsprechende Parametrisierungsschritte durchführt, wobei verschiedene Informationen zur Lösung der konkreten Aufgabe, also eines konkreten Produktionsschrittes, integriert werden. Am darauffolgenden Werktag beziehungsweise bei einer nächsten Schicht kann ein anderer Werker 32 den Roboter beziehungsweise die Produktionsmaschine 10 benutzen, wobei ein anderer Satz von Parametern benötigt wird. Bisher wurden nun die vorherigen Parameter überschrieben.

Durch die Verwendung der Container mit dem vorgestellten Verfahren ist dies nicht mehr der Fall. So muss man für den ersten Produktionsschritt, um diesen zu wiederholen, lediglich einen entsprechenden Container verwenden. So kann auf besonders vorteilhafte Weise eine Speicherung und/oder Wiederverwendung von Parametern für bestimmte Container und Prozesse integriert werden. Dabei wird vorteilhafterweise, wie FIG 3 zeigt, als Grundlage die BPMN verwendet, welches zwei Bereiche 34 und 36 zeigt. Dabei zeigt der Bereich 34 Aufgaben, welche durch die Produktionsmaschine 10 zu erledigen sind, und der Bereich 36 zeigt Aufgaben, welche durch den Werker 32 als Interaktion mit der Produktionsmaschine 10 zum Erledigen des Produktionsschritts erfolgen müssen. So zeigen die einzelnen Kästen im Bereich 34 Handwerksschritte 38 und die Kästen im Bereich 36 zumindest Teilschritte 40 des jeweiligen Produktions schritts.

Bei der ersten Durchführung des Verfahrens kann insbesondere ein Anlernen der Produktionsmaschine 10 durch den Werker 32 erfolgen, welches beispielsweise in der Fig 2 an der Stelle des Schritts S5 erfolgen kann.

Zusammenfassend ist durch das vorgestellte Verfahren ein Konzept vorgestellt, das an eine Entwicklung zur Fertigung des Objekts mit der Fertigungsanlage 12 in der Industrie 4.0 vorteilhaft ermöglicht. Die Container, insbesondere Softwarecontainer, können als Fähigkeiten - sogenannte Skills - bezeichnet beziehungsweise betrachtet werden. Eine Fähigkeit beziehungsweise ein Skill kann mehrere Container erhalten. Eine entsprechende Fähigkeit beziehungsweise Skill ist dergestalt, dass diese kann von einem Ingenieur und/oder dem Werker 32 leicht verstanden werden kann.

Das in FIG 2 vorgeschlagene Verfahren kann aus Nutzerperspektive beziehungsweise Werkerperspektive demnach so beschrieben werden, dass zunächst beispielsweise ein Ingenieursteam für den Schritt S1 Produktionsanweisungen beziehungsweise Anforderungen vorgibt, welche einen neuen Prozess für die Herstellung des Objekts beschreiben. Diese Beschreibung wird in dem Speicher 16 hinterlegt und insbesondere durch das BPN-Format als Dateiformat 14 repräsentiert. So können auf einfache Weise benötigte Ressourcen und Produktionsschritte zur Erreichung des Ziels, also der Fertigung des Objekts, hervorgehoben werden. Beispielsweise kann ein Roboter mit 20 Kilo Traglast, ein Bediener und eine 2D-Kamera für einen Produktionsschritt nötig sein, was durch die Ressource angegeben werden kann. Anschließend werden die Informationen aus dem BPN entsprechend einer Spezifikation geparst. Beim Parsen werden Regeln beachtet, welche beispielsweise aus dem BPN-Standard stammen. Ferner wird so eine Interoperabilität mit bestehenden Produktlebenszyklus-Management- (englisch: Products Life Cycle Management) und/oder Produktionsleitsystemen (englisch: Manufacturing Execution System, kurz MES-System) ermöglicht.

Dabei kann beispielsweise ein Mapping beziehungsweise eine Zuordnung zwischen BPMN Dateiformat und ISA95 erfolgen, sodass beispielsweise Prozessschritte als Operationsdefinitionen vorgehalten werden und/oder Serviceanforderungen in Operationssegmente unterteilt werden. So kann insbesondere eine Art Parsen zwischen BPMN und ISA95 ermöglicht werden. So ist eine Zuordnung beispielsweise von Prozessvorgängen möglich.

Nach dem Parsen sind somit Fähigkeiten und/oder Anforderungen an die jeweilige Ressource besser definiert, da die Ressourcen und Vorgänge genau festgelegt werden können. Im nächsten Schritt erfolgt ein Abgleich zwischen den Vorgangssegmenten und einem lokalen Verzeichnis 42 beziehungsweise einem lokalen Kompetenzregister. Dadurch kann festgestellt werden, welche lokalen Fähigkeiten beziehungsweise Ressourcen für einen bestimmten Vorgang eingesetzt werden sollen.

Auf der einen Seite wird somit ein Container anhand einer Metrik - wie der Levenshtein-Distanz, welche eine Metrik zur Messung der Unterschiede zwischen der Definition im Operationssegment und der Definition in dem lokalen Kompetenzregister darstellt - ausgewählt. Dazu wird der jeweilige Abstandswert ermittelt, um die Auswahl zu treffen. Wird so keine Fähigkeit gefunden, wird eine neue Auswahl aus dem globalen Verzeichnis 44 getroffen.

Andererseits kann so ein Abgleich der in der Vorgangsdefinition beziehungsweise beim Vorgeben der Produktionsanweisungen definierten Ressourcen mit den tatsächlich durch die jeweilige Produktionsmaschine vorgehaltenen Ressourcen in der Fertigung ermöglicht werden. So kann präzise ermittelt werden, welche Ressourcen in den Produktionsschritten erforderlich sind.

Da die Fähigkeiten beziehungsweise die Skills in der Regel zumindest nicht gleich parametrisiert sind, sollte vorteilhafterweise ein Parametrisierungsprozess durchgeführt werden, welcher den Parametersatz 20 erzeugt. So erfolgt beispielsweise bei dem Ablegen einer der Produktionsanweisung die Wahl einer Endposition, welche nach der Parametrisierung durch eine Trajektorie beschrieben wird. Nach der Parametrisierung können der Werker 32 beziehungsweise die Produktionsmaschine 10 beispielsweise unter Verwendung von richtigen Schnittstellen die Fertigung ausführen.

Die Parameter der Parametrisierung und somit der Parametersatz 20 können anschließend für die entsprechenden Container in der insbesondere lokalen Datenbank 22 zur späteren Verwendung gespeichert.

Das BPMN-Format kann mit den Parametern präpariert beziehungsweise ergänzt werden, sodass schließlich die parametrisierte BPMN an die elektronische Recheneinrichtung 18 und somit beispielsweise an ein Planungsbüro zurückgegeben werden kann. So kann sie für zukünftige Verwendungen gespeichert werden, um beispielsweise für eine Fertigung mit den bekannten und bewährten Parametern an eine weitere Fertigungsanlage weitergegeben zu werden.

Durch das vorgestellte Verfahren kann, wann immer ein gleicher Produktionsschritt ausgeführt werden soll, durch das verwendete Dateiformat 14 mit Verweisen auf einen konkreten Parameter ein Container verwendet werden und in die Produktion übernommen werden. So kann beispielsweise eine Art Plugand-Play-Betrieb für die Fertigungsanlage 12 ermöglicht werden. Darüber hinaus kann durch die Verwendung des vorgegebenen Dateiformats 14 beziehungsweise der Container eine Orchestrierung eines IT-Frameworks durchgeführt werden.

Ferner kann das gezeigte Verfahren auf Robotersysteme angewandt werden, es kann jedoch auf verschiedene Arten von Automatisierungssystem übertragen werden. So kann die durch das Verfahren bereitgestellte Technologie in Produktlebenszyklus-Management-Werkzeugen als auch in eine nächste Generation von Maschinensteuerung integriert werden.

### Bezugszeichenliste

- S1: erster Schritt
- S2: zweiter Schritt
- S3: dritter Schritt
- S4: vierter Schritt
- S5: fünfter Schritt
- S6: sechster Schritt
- 10: Produktionsmaschine
- 12: Fertigungsanlage
- 14: Dateiformat
- 16: Speicher
- 18: elektronische Recheneinrichtung
- 20: Parametersatz
- 22: Datenbank
- 24: Verzeichnis
- 26: Abgleich
- 28: Umwandlung
- 30: Parser
- 32: Werker
- 34: Bereich
- 36: Bereich
- 38: Handwerksschritt
- 40: Teilschritt
- 42: lokales Verzeichnis
- 44: globales Verzeichnis
- 46: Beschreibung
- 48: Mensch-Maschine-Interface

## Patentansprüche

1. Verfahren zum Betreiben einer mehrere Produktionsmaschinen (10) umfassenden Fertigungsanlage (12), in welcher ein Objekt durch Produktionsschritte mittels der Produktionsmaschinen (10) zumindest teilweise gefertigt wird, mit den Schritten:
- Ablegen von Produktionsanweisungen, welche zumindest einen der Produktionsschritte zur Fertigung des Objekts charakterisieren, in einem vorgegebenen Dateiformat (14) in einem Speicher (16) einer elektronischen Recheneinrichtung (18); (S1)
- Zergliedern der Produktionsanweisungen und Ablegen der jeweiligen Produktionsanweisung in wenigstens einem Container; (S2)
- Durchführen eines Abgleiches der zergliederten Produktionsanweisungen mit durch die jeweilige Produktionsmaschine (10) bereitstellbarer Ressource, welche bei zumindest einem der Produktionsschritte verwendbar ist; (S3)
- Ermitteln eines Abstandswertes zwischen korrespondierenden Produktionsanweisungen und Ressourcen anhand des Abgleichs; (S4)
- Auswahl wenigstens eines Containers, der wenigstens eine Produktionsanweisung umfasst, deren ermittelter Abstandswert kleiner als ein vorgegebenen Schwellenwert ist; (S5) und
- Bereitstellen des ausgewählten Containers an die die korrespondierende Ressource vorhaltende Produktionsmaschine (10) zur Herstellung des Objekts;

2. Verfahren nach Anspruch 1,
**dadurch gekennzeichnet, dass**
ein Parametersatz (20) aus der in dem bereitgestellten Container hinterlegten Produktionsanweisungen gebildet wird.

3. Verfahren nach Anspruch 2,
**dadurch gekennzeichnet, dass**
der Parametersatz (20) und der zugehörige Container in einer Datenbank (22) gespeichert wird.

4. Verfahren nach Anspruch 2 oder 3,
**dadurch gekennzeichnet, dass**
der Parametersatz (20) bei einer Wiederholung des Verfahrens zumindest einen Teil der Produktionsanweisungen bildet.

5. Verfahren nach einem der vorhergehenden Ansprüche,
**dadurch gekennzeichnet, dass**
das vorgegebene Dateiformat (14) im Format einer Auszeichnungssprache und/oder einer Spezifikationssprache ausgebildet wird.

6. Verfahren nach einem der vorhergehenden Ansprüche,
**dadurch gekennzeichnet, dass**
der jeweilige Container zusätzlich zur Produktionsanweisung ein Laufzeitmodul und/oder ein Systemwerkzeug und/oder eine Systembibliothek enthält, wodurch die Produktionsmaschine (10) mittels des Containers betrieben wird.

7. Verfahren nach einem der vorhergehenden Ansprüche,
**dadurch gekennzeichnet, dass**
als wenigstens eine der Produktionsmaschinen (10) ein Roboter betrieben wird.

8. Verfahren nach einem der vorhergehenden Ansprüche,
**dadurch gekennzeichnet, dass**
der Abstandswert mittels einer Levenshtein-Distanz ermittelt wird.

9. Computerprogramm, welches direkt in einen Speicher einer elektronischen Recheneinrichtung (18) ladbar ist, mit Programmmitteln, um die Schritte des Verfahrens nach einem der Ansprüche 1 bis 8 auszuführen, wenn das Programm in der elektronischen Recheneinrichtung (18) ausgeführt wird.

10. Elektronisch lesbarer Datenträger mit darauf gespeicherten elektronisch lesbaren Steuerinformationen, welche zumindest ein Computerprogramm nach Anspruch 9 umfassen und derart ausgestaltet sind, dass sie bei Verwendung des Datenträgers in einer elektronischen Recheneinrichtung (18) ein Verfahren nach einem der Ansprüche 1 bis 8 durchführen.
